# FASCICULE DE BREVET EUROPEEN

(11) **EP 1 431 136 B1**
(45) Date de publication et mention de la délivrance du brevet: **05.10.2005**
(21) Numéro de dépôt: 03293081.0
(22) Date de dépôt: 10.12.2003
(51) Int. Cl.: B60R 21/34, B62D 25/10

(54) **Dispositif de sécurité pour soulever un capot d'un véhicule automobile en cas de collision**
Sicherheitseinrichtung zum Anheben einer Motorhaube bei einem Zusammenstoss
Safety device for raising a vehicle hood in case of collision

(30) Priorité: 20.12.2002 FR 0216346
(43) Date de publication de la demande: 23.06.2004
(73) Titulaire: PYROALLIANCE, 78130 Les Mureaux (FR)
(72) Inventeur: Nadeau, Jean-Paul, 83190 Ollioules (FR); d'Emmanuelle, Laurent, 83200 Toulon (FR); Laspesa, Eric, 83140 Six Fours (FR); Borg, Evrard, 83110 Sanary (FR)

(56) Documents cités:
- DE-A- 10 116 716
- DE-A- 19 957 872
- DE-U- 20 216 240
- US-A1- 2002 026 685
- US-B1- 6 439 330
- PATENT ABSTRACTS OF JAPAN vol. 1999, no. 04, 30 avril 1999 (1999-04-30) -& JP 11 020741 A (NISSAN MOTOR CO LTD), 26 janvier 1999 (1999-01-26)
- PATENT ABSTRACTS OF JAPAN vol. 2000, no. 02, 29 février 2000 (2000-02-29) -& JP 11 310158 A (HONDA MOTOR CO LTD), 9 novembre 1999 (1999-11-09)

## Description

Le domaine technique de l'invention est celui des dispositifs utilisés dans le domaine de la sécurité automobile pour protéger un piéton en cas de choc frontal entre ledit piéton et un véhicule automobile.

Lorsqu'un piéton est percuté par l'avant d'un véhicule automobile, il est courant que la tête du piéton vienne en contact direct avec le capot avant du véhicule. Le choc de la tête sur le capot provoque des déformations du capot. Ces déformations se produisent souvent jusqu'à ce que le capot entre en contact avec le bloc moteur situé juste au-dessous. Le mouvement de la tête du piéton est alors brusquement stoppé par le capot en contact avec le bloc moteur et subit donc une violente décélération pouvant causer de graves blessures au piéton.

Il est connu dans l'art antérieur des dispositifs permettant, lors d'un choc entre un piéton et un véhicule automobile, de soulever le capot du véhicule d'une certaine hauteur de manière à éviter que les membres du piéton et notamment sa tête soient stoppés, lors du choc contre le capot, par le bloc moteur situé juste au-dessous du capot. Dans les dispositifs de l'art antérieur, le soulèvement du capot est effectué au niveau de l'arrière du capot, c'est-à-dire du côté opposé à celui utilisé pour l'ouverture ou la fermeture du capot lors de son fonctionnement normal, le capot restant fixé à l'avant du véhicule automobile.

La demande de brevet EP 0 509 690 décrit un tel dispositif. Ce dispositif est entièrement mécanique et comporte, dans un premier mode de réalisation, des bras pivotants permettant de soulever le capot pour augmenter l'espace entre le capot et le bloc moteur. Le pivotement des bras est obtenu en déplaçant le capot vers l'arrière. Lors d'une collision frontale entre un véhicule muni d'un tel dispositif et un piéton, le choc du piéton sur le capot provoque une translation du capot vers l'arrière, cette translation s'accompagnant, à l'aide des bras pivotants, du soulèvement du capot.

La demande de brevet WO 00/69703 décrit également un dispositif mécanique de protection des piétons en cas de choc contre le capot d'un véhicule automobile. Ce dispositif comporte deux bras sensiblement parallèles utilisés pour l'ouverture et la fermeture lors du fonctionnement normal du capot. Au moins l'un de ces bras a une longueur variable en fonction de l'impact du piéton sur le capot. L'impact sur le capot allonge le bras et éloigne donc le capot du bloc moteur.

Ces deux demandes de brevet divulguent des dispositifs mécaniques qui sont déclenchés lors de l'impact du piéton sur le capot. Dans la première demande, c'est la translation du capot vers l'arrière, causé par le choc du piéton contre le capot, qui déclenche le dispositif de soulèvement. La tête du piéton peut donc très bien avoir déjà percuté le capot lorsque le dispositif de soulèvement du capot se déclenche. Dans la deuxième demande, le choc s'est également déjà produit lors de l'activation du dispositif puisque le bras varie en longueur en fonction de l'impact du piéton sur le capot. Les dispositifs divulgués dans ces deux demandes sont donc lents et ne permettent aucunement d'anticiper le choc du piéton contre le capot.

La demande de brevet GB 2 373 218 décrit un dispositif permettant de soulever le capot d'un véhicule automobile lors d'une collision. Ce dispositif comporte une structure gonflable à l'aide d'un générateur de gaz. Cette structure est composée d'un matériau déformable plastiquement. Dans ce dispositif, le générateur de gaz est couplé à un détecteur de collision ce qui permet, à l'inverse des deux dispositifs décrits dans les deux demandes précédentes, de soulever le capot très tôt, c'est-à-dire lorsque le véhicule percute le piéton. Dans ce cas, le capot est déjà soulevé lorsque par exemple la tête du piéton vient percuter le capot. Dans un tel dispositif, il est nécessaire que le générateur de gaz soit directement placé sous la structure gonflable de manière à pouvoir obtenir un gonflage rapide et immédiat de la structure. L'installation d'un tel dispositif nécessitera donc de disposer sous le capot du véhicule automobile d'un espace important. Or l'espace libre dans un véhicule est une chose de plus en plus rare du fait notamment de la multiplication du nombre de dispositifs notamment électroniques. De plus ce dispositif, une fois utilisé, devra être remplacé dans sa totalité.

Le document US 6,439,330 décrit un dispositif pour soulever le capot d'un véhicule automobile selon le préambule de la revendication 1. Ce dispositif comporte un ensemble pour le soulèvement, doté d'un bras monté en rotation à l'une de ses extrémités avec une patte solidaire du capot. La seconde extrémité du bras est solidaire d'un axe de rotation monté sur un rail et apte à coulisser suivant ledit rail. Un actionneur pyrotechnique comporte une tige dont l'extrémité est montée en rotation sur ledit axe de rotation. L'extraction de la tige sous l'action des gaz générés dans l'actionneur provoque donc la translation de l'axe suivant le rail, ce qui entraîne le soulèvement du capot. Le dispositif décrit présente également un dispositif de verrouillage chargé de bloquer l'ensemble de soulèvement lorsque celui-ci est au repos et donc d'empêcher le soulèvement du capot.

Un dispositif tel que décrit dans ce dernier brevet américain combine, pour obtenir le soulèvement du capot, une translation et une rotation de son ensemble de soulèvement. Une telle cinématique nécessite donc l'utilisation d'une pièce spécifique, en l'occurrence celle d'un rail, pour obtenir la translation de l'extrémité du bras.

Le document DE 199 57 872 divulgue également un dispositif pour le soulèvement d'un capot d'un véhicule automobile. Selon une première configuration, ce dispositif comporte une bielle montée en rotation à ses deux extrémités avec, d'une part, à sa première extrémité, le capot du véhicule et d'autre part, à sa seconde extrémité, un élément déformable solidaire du véhicule. Un actionneur pyrotechnique comporte une tige dont l'extrémité est montée en pivot en un point situé sensiblement au milieu de la bielle. Cet actionneur pyrotechnique est placé sous la bielle de sorte que, lorsqu'il est actionné, sa tige s'extraie verticalement pour faire pivoter la bielle. Lors d'un choc avec un piéton, l'extraction de la tige provoque donc le pivotement de la bielle autour de l'axe situé à sa seconde extrémité. Lorsque la bielle a pivoté, le choc produit par le piéton contre le capot provoque le basculement de la bielle autour de son point central, ce basculement de la bielle étant permis grâce à la déformation de l'élément déformable.

Selon une seconde configuration de ce dispositif, la bielle, à sa seconde extrémité, est fixée directement sur le véhicule. Lors du choc du piéton contre le capot, la bielle ne bascule pas en pivotant autour de son point central au niveau duquel est fixé la tige, mais se tord sur sa partie située entre son point central et sa première extrémité.

Un tel dispositif permet, à l'inverse de celui décrit dans le document américain US 6,439,330, de s'affranchir de l'utilisation d'un rail pour obtenir le soulèvement du capot. De plus, un tel dispositif utilise une cinématique de fonctionnement simple puisque le soulèvement est obtenu uniquement par rotation de la bielle. Toutefois, il n'utilise pas de dispositif de verrouillage permettant d'empêcher l'ouverture du capot. De plus, dans un tel dispositif, le soulèvement du capot est réalisé entièrement et directement par la tige de l'actionneur. La force nécessaire à générer pour soulever le capot doit de fait être très importante et nécessite donc l'utilisation d'une quantité importante de matière pyrotechnique. L'utilisation d'un tel dispositif peut donc s'avérer encombrant et volumineux.

Le but de l'invention est donc d'obtenir un dispositif de sécurité pouvant être actionné en cas de choc d'un véhicule automobile contre un piéton, qui présente une cinématique de fonctionnement simple tout en présentant un dispositif de verrouillage, qui est peu encombrant, qui peut être facilement logé sous le capot, et qui peut, une fois utilisé, être laissé en place, au moins en partie, sous le capot afin d'être réutilisé.

Ce but est atteint par un dispositif de sécurité pour soulever un capot d'un véhicule automobile en cas de collision, ledit capot comprenant une structure permettant, en fonctionnement normal, son ouverture ou sa fermeture, autour d'un axe dit de rotation, le dispositif étant situé sous ledit capot et comprenant un mécanisme de soulèvement dudit capot, un actionneur actionné à l'aide d'un générateur de gaz et un dispositif de verrouillage dudit mécanisme de soulèvement, ledit mécanisme de soulèvement comportant une bielle, ledit dispositif étant caractérisé en ce que l'actionneur est apte à provoquer une translation du mécanisme de soulèvement pour entraîner son déverrouillage, suivie d'une rotation de la bielle dudit mécanisme pour obtenir le déploiement dudit mécanisme de soulèvement.

Le dispositif de verrouillage permet de maintenir le mécanisme de soulèvement au repos et donc de ne pas perturber le fonctionnement normal d'ouverture ou de fermeture du capot.

Après utilisation du dispositif de sécurité selon l'invention, seul le générateur de gaz usagé aura à être remplacé. Le dispositif de sécurité selon l'invention, s'il n'a pas été endommagé lors de la collision, pourra être maintenu tel quel sous le capot du véhicule automobile.

Selon une particularité, le dispositif de sécurité est adaptable directement sur la structure utilisée pour le fonctionnement normal du capot. Ainsi le dispositif de sécurité selon l'invention pourra être installé facilement sur n'importe quel type de véhicule à moindre coût sans qu'il soit nécessaire de modifier profondément le mécanisme de fonctionnement normal du capot.

Selon une autre particularité, le mécanisme de soulèvement du capot est articulé autour de l'axe de rotation du capot. Ainsi, selon l'invention, il s'agit d'utiliser directement l'axe de rotation du capot dans l'articulation du mécanisme de soulèvement du dispositif de sécurité selon l'invention.

Selon une autre particularité, le dispositif de verrouillage du mécanisme de soulèvement est constitué de deux formes complémentaires pouvant coopérer entre elles pour verrouiller le mécanisme de soulèvement, l'une de ces formes étant solidaire du mécanisme de soulèvement et l'autre d'une partie fixe par rapport au véhicule.

Selon l'invention, le déverrouillage du mécanisme de soulèvement est obtenu en provoquant d'abord une translation du mécanisme de soulèvement de manière à séparer les deux formes complémentaires du dispositif de verrouillage. Selon l'invention, il s'agit donc du même actionneur qui permet de déverrouiller le mécanisme de soulèvement et de le déployer pour permettre le soulèvement du capot. Selon l'invention, le déverrouillage et le déploiement du mécanisme de soulèvement sont réalisés l'un après l'autre par un mouvement continu exercé par l'actionneur sur le mécanisme de soulèvement.

Selon une autre particularité, la bielle est montée en pivot à l'une de ses extrémités autour d'un axe dit de pivotement fixe par rapport au véhicule et est articulée à son autre extrémité avec le capot autour de l'axe de rotation du capot. Le capot peut donc pivoter suivant deux axes distincts et se soulever suivant deux sens opposés. Le mécanisme de soulèvement selon l'invention est articulé autour de ces deux axes de rotation. Selon l'invention, après la translation du mécanisme de soulèvement pour obtenir son déverrouillage, l'actionneur entraîne la bielle en rotation autour de son axe de pivotement. Contrairement à l'enseignement du document US 6,439,330, le déploiement du mécanisme et donc le soulèvement du capot sont obtenus uniquement par rotation de la bielle autour d'un axe fixe.

Selon une autre particularité, la bielle est montée en coulissement à chacune de ses extrémités, d'une part par rapport à l'axe de rotation et d'autre part par rapport à l'axe de pivotement. La translation du mécanisme de soulèvement est donc obtenue par cet arrangement particulier de la bielle par rapport à ses deux axes d'articulation. La bielle comporte par exemple deux ouvertures oblongues orientées parallèlement à son axe longitudinal, dans chacune desquelles est monté l'un de ses axes de pivotement ou de rotation.

Selon une autre particularité, l'actionneur comporte un piston solidaire d'une tige, ledit piston étant apte à se déplacer dans une chambre sous l'action des gaz générés par le générateur de gaz.

Selon l'invention, le mécanisme de soulèvement peut être déployé par un mouvement de poussée ou par un mouvement de traction. Selon un mode de réalisation préféré, le générateur de gaz génère des gaz pour extraire la tige de l'actionneur. Il s'agira donc dans ce cas d'exercer une poussée pour déployer le mécanisme de soulèvement selon l'invention.

La translation du mécanisme de soulèvement est donc effectuée suivant la direction de poussée de la tige de l'actionneur et d'une longueur suffisante pour séparer les formes complémentaires du dispositif de verrouillage. La translation du mécanisme de soulèvement s'effectue jusqu'à une butée et est suivie, sous l'action continue de la tige de l'actionneur, du déploiement du mécanisme de soulèvement par rotation de la bielle autour de son axe de pivotement.

Selon une autre particularité, la tige est apte à s'extraire de l'actionneur suivant une direction horizontale, le mécanisme de soulèvement transformant le mouvement horizontal de la tige en un mouvement vertical de soulèvement du capot.

Selon l'invention, il n'est pas nécessaire que le dispositif selon l'invention soit concentré en un endroit sous le capot. En effet, l'actionneur pourra être placé en fonction de l'espace présent sous le capot à une certaine distance du mécanisme de soulèvement. La longueur de la tige de l'actionneur et la quantité de gaz à générer devront alors être adaptées.

Selon une autre particularité, le dispositif de sécurité comporte des moyens de freinage au mouvement de retour de la tige dans la chambre de l'actionneur. Cela permettra d'éviter le retour de la tige dans sa position initiale et d'amortir le choc du piéton sur le capot.

Selon une autre particularité, la tige de l'actionneur est solidaire de la bielle en un point déporté par rapport à l'axe de pivotement de ladite bielle et par rapport à l'axe longitudinal de la bielle. La tige de l'actionneur étant actionnée dans le sens de l'extraction, ce point déporté devra se situer dans un plan horizontal inférieur au plan comportant l'axe de pivotement de la bielle. Ainsi la bielle, sous l'action de l'actionneur, pivote dans le même sens que celui du capot.

Selon une autre particularité, la tige comprend une extrémité apte à coulisser dans une ouverture oblongue formée sur la bielle pour provoquer la rotation de la bielle autour de son axe de pivotement.

Selon une autre particularité, la bielle est fabriquée dans un matériau déformable. Cette caractéristique de la bielle permettra d'effectuer ou de contribuer à l'amortissement du choc du piéton contre le capot. La bielle pourra être déformable de manière plastique ou élastique.

Selon une autre particularité, l'actionneur est fixé sur un support déformable, fixe par rapport au véhicule. Cette particularité permettra de remplir également une fonction d'amortissement du choc du piéton contre le capot.

L'invention, avec ses caractéristiques et avantages, ressortira plus clairement à la lecture de la description faite en référence aux dessins annexés dans lesquels :
La figure 1 représente, en perspective, une partie d'un capot d'un véhicule automobile ouvert à l'aide de son mécanisme d'ouverture normal, sur lequel est adapté le dispositif de sécurité selon l'invention.
La figure 2 représente, en perspective, le dispositif de sécurité selon l'invention dans sa position de repos.
La figure 3 représente, en perspective, le dispositif de sécurité selon l'invention en position déverrouillée.
La figure 4 représente, en perspective, le dispositif de sécurité selon l'invention partiellement déployé.
La figure 5 représente, en perspective, le dispositif de sécurité selon l'invention entièrement déployé.
La figure 6 représente en coupe longitudinale un actionneur utilisé dans le dispositif de sécurité selon l'invention.

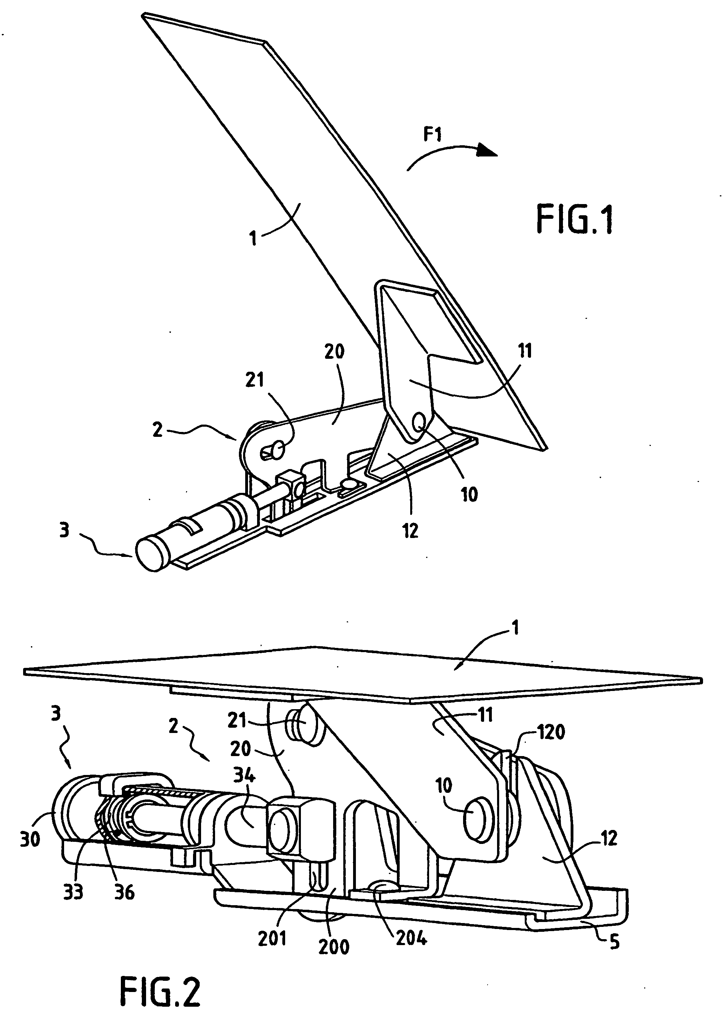

L'invention va à présent être décrite en liaison avec les figures 1 à 6.

Dans la suite de la description l'expression "axe de rotation" devra être comprise comme représentant à la fois la ligne fictive autour de laquelle la rotation s'effectue et la pièce mécanique permettant d'effectuer cette rotation.

Dans la suite de la description, les mots "avant" et "arrière" ainsi que "devant" et "derrière" devront être compris en se référant à l'avant et à l'arrière d'un véhicule automobile.

En référence à la figure 1 et de manière connue, un capot 1 d'un véhicule automobile est apte à s'ouvrir ou se fermer en pivotant autour d'un axe 10 de rotation sensiblement horizontal situé vers l'arrière du capot 1. Le capot 1 peut ainsi être ouvert complètement pour accéder au moteur. Sur la figure 1, le capot 1 est solidaire d'une patte 11 de soulèvement pivotante autour de l'axe 10 de rotation du capot 1.

Selon l'invention, sur les figures 1 et 2, lors du fonctionnement normal du capot 1, l'axe 10 de rotation du capot 1 repose dans une entaille 120 formée dans un support 12 fixé sur une partie 5 fixe par rapport au véhicule. Le sens de soulèvement du capot 1 lors de son ouverture en fonctionnement normal est défini sur la figure 1 par la flèche F1.

En référence aux figures 1 à 5, le dispositif de sécurité selon l'invention comporte un mécanisme 2 de soulèvement constitué d'une bielle 20 montée en pivot à l'une de ses extrémités, dite première extrémité, sur une partie 5 fixe par rapport au véhicule et articulée à son extrémité opposée, dite seconde extrémité, autour de l'axe 10 de rotation du capot 1, avec ladite patte 11 de soulèvement solidaire du capot 1. A sa première extrémité, l'axe 21 de pivotement de la bielle 20 à sa première extrémité est horizontal et parallèle à l'axe 10 de rotation du capot 1. La bielle 20 pivote donc autour de cet axe 21 fixe selon un plan de pivotement vertical. Comme représenté sur les figures 1 et 2, au repos, c'est-à-dire lorsque le mécanisme 2 de soulèvement est replié, l'axe 21 de pivotement de la bielle 20 est dans un plan vertical situé à l'avant par rapport au plan vertical auquel appartient l'axe 10 de rotation du capot 1.

Comme représenté en figure 2, au repos, le mécanisme 2 de soulèvement est en position repliée et l'axe 10 de rotation du capot 1 repose sur son support 12. La bielle 20 est dans une position sensiblement horizontale.

Selon l'invention, le déploiement du mécanisme 2 de soulèvement est obtenu grâce à un actionneur 3 fixé à une partie 5 fixe par rapport au véhicule

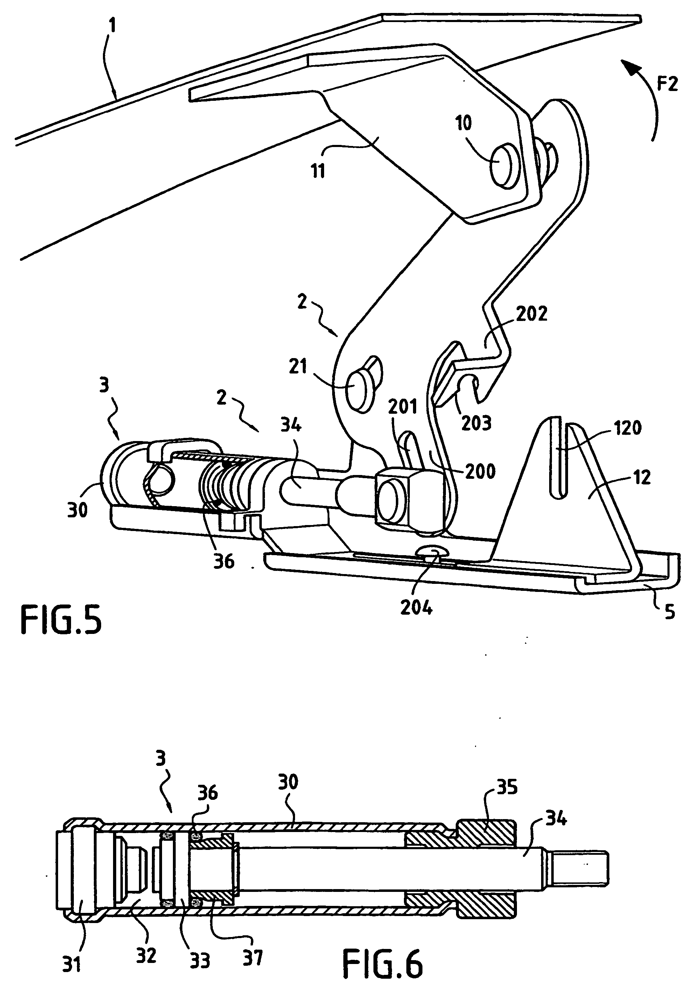

En référence à la figure 6, cet actionneur 3 comporte par exemple un cylindre 30 obturé à une extrémité, dite extrémité amont, par un générateur 31 de gaz. Ce générateur 31 de gaz comporte une sortie des gaz débouchant dans une chambre 32 délimitée entre ledit générateur 31 et un piston 33 apte à se déplacer dans le cylindre 30 sous l'action des gaz générés par le générateur 31 de gaz. Le piston 33 est solidaire d'une tige 34 guidée à travers une bague 35. Cette bague 35 est coaxiale par rapport au cylindre 30 et fixée à l'extrémité opposée à l'extrémité amont du cylindre 30 et dite extrémité aval. Sous l'action des gaz générés par le générateur 31 de gaz, le piston 33 se déplace et la tige 34 se déploie ou autrement dit s'extrait hors du cylindre 30 en direction du mécanisme 2 de soulèvement, par exemple suivant une direction sensiblement horizontale. L'actionneur 3 est placé vers l'avant par rapport au mécanisme 2 de soulèvement. La tige 34 de l'actionneur 3 exerce donc une poussée de l'avant vers l'arrière en direction du mécanisme 2 de soulèvement.

Le générateur 31 de gaz utilisé est par exemple un générateur 31 de gaz pyrotechnique comportant de manière connue un initiateur et une charge pyrotechnique à initier. Le générateur 31 de gaz sera par exemple un microgénérateur de gaz tel que ceux utilisés en sécurité automobile dans des prétensionneurs de ceinture de sécurité. Ce microgénérateur pourra prendre la forme d'un allumeur électro-pyrotechnique du type de ceux utilisés en sécurité automobile pour initier en combustion une charge pyrotechnique contenue dans un dispositif générateur de gaz pour rétracter une ceinture de sécurité. Ces allumeurs peuvent donc être fabriqués facilement et à des coûts réduits. Il n'est donc pas nécessaire de recourir à des générateurs de gaz développés spécifiquement pour le dispositif selon l'invention. Ceci permet de simplifier la fabrication du dispositif selon l'invention et de réduire son coût.

Selon l'invention, l'actionneur 3 comporte un dispositif de freinage du mouvement du piston 33 lors d'un retour de la tige 34 vers l'intérieur du cylindre 30, ce retour de la tige 34 étant dû au choc du piéton contre le capot. Ce dispositif de freinage est un système comportant des billes 36 logées dans une partie du piston 33. Lors d'un retour de la tige 34 vers l'intérieur du cylindre 30, les billes 36 suivent un profil tronconique du piston 33 et viennent ainsi en contact avec la paroi interne du cylindre 30. Les billes 36 permettent ainsi de freiner le piston 33 lors d'un retour de la tige 34 vers l'intérieur du cylindre 30.

Ce système de freinage comporte plus particulièrement une pièce 37 annulaire enfilée sur la tige 34 et venant en appui contre le piston 33. Cette pièce 37 a une surface extérieure suivant un profil tronconique et est orientée de sorte que sa partie de plus faible diamètre extérieur soit la plus en amont, c'est-à-dire en appui contre le piston 33. Une bague 35 comportant des logements dans chacun desquels est placée une bille 36 est positionnée autour de la pièce 37 annulaire et contre le piston 33. La bague 35 comporte un diamètre extérieur équivalent à celui du piston 33. Lors d'un retour de la tige 34 vers l'intérieur du cylindre 30, les billes 36 sont extraites hors de leur logement et suivent le profil tronconique de la pièce 37 annulaire. En suivant ce profil, les billes 36 viennent frotter contre la surface interne de la paroi du cylindre 30.

Selon l'invention, l'extrémité libre de la tige 34, située à l'extérieur de l'actionneur 3, est fixée au mécanisme 2 de soulèvement du capot 1. La bielle 20 du mécanisme 2 de soulèvement comporte par exemple une première patte 200 munie d'une ouverture 201 oblongue formée suivant un plan vertical, par exemple suivant le plan de pivotement de la bielle 20. L'extrémité libre de la tige 34 est montée coulissante dans ladite ouverture 201 oblongue. Lorsque le mécanisme 2 de soulèvement est au repos comme représenté en figures 1 et 2, l'ouverture 201 oblongue est allongée suivant un axe sensiblement perpendiculaire à la direction de poussée de la tige 34 de l'actionneur 3. L'ouverture 201 oblongue est déportée par rapport à l'axe 21 de pivotement de la bielle 20 et par rapport à l'axe longitudinal de la bielle. Selon l'invention, au repos, la liaison entre l'extrémité de la tige 34 et la bielle 20 est située dans un plan horizontal inférieur à celui comportant l'axe 21 de pivotement de la bielle 20.

Selon l'invention, le mécanisme 2 de soulèvement du capot 1 comporte un dispositif de verrouillage lui permettant de se maintenir en position repliée lors du fonctionnement normal du capot 1. La bielle 20 du mécanisme 2 de soulèvement comporte une seconde patte 202 s'étendant dans le plan de pivotement, parallèlement à la première patte 200 et formant un angle droit. La partie de la seconde patte 202 qui est perpendiculaire au plan de pivotement de la bielle 20 comporte une entaille 203 formée de l'arrière vers l'avant dont les deux branches sont destinées à venir enserrer la tige d'un rivet 204 enfoncé dans une partie fixe du véhicule de sorte que les branches soient situées juste au-dessous de la tête du rivet 204. Le déploiement du mécanisme 2 de soulèvement est donc bloqué par les branches de l'entaille 203 venant en butée contre la tête du rivet 204.

Pour le déverrouillage du mécanisme 2 de soulèvement, la bielle 20 est coulissante selon une direction sensiblement horizontale. Pour ce coulissement, l'axe 21 de pivotement de la bielle 20 ainsi que l'axe 10 de rotation du capot 1 sont montés chacun respectivement à la première extrémité et à la seconde extrémité de la bielle 20 dans une ouverture oblongue 22, 23 dont l'axe de symétrie est parallèle à la direction de poussée de la tige 34 de l'actionneur 3.

Le fonctionnement du dispositif de sécurité selon l'invention est le suivant :

Lors d'une ouverture ou d'une fermeture du capot 1 en fonctionnement normal, l'axe 10 de rotation du capot 1 repose dans son support 12, à l'arrière du capot 1, et la patte 11 de soulèvement solidaire du capot 1 est apte à pivoter autour de l'axe 10 de rotation du capot 1. L'ouverture du capot 1 en fonctionnement normal est réalisée dans le sens défini sur la figure 1 par la flèche F1. Le mécanisme 2 de soulèvement selon l'invention est alors replié et verrouillé. Au repos, comme représenté en figure 2, l'extrémité libre de la tige 34 est située au sommet de l'ouverture 201 oblongue de la première patte 200 de la bielle 20 et, l'axe 21 de pivotement de la bielle 20 et l'axe 10 de rotation du capot 1 sont le plus en avant dans les ouvertures oblongues 22, 23 formées à chacune des extrémités de la bielle 20.

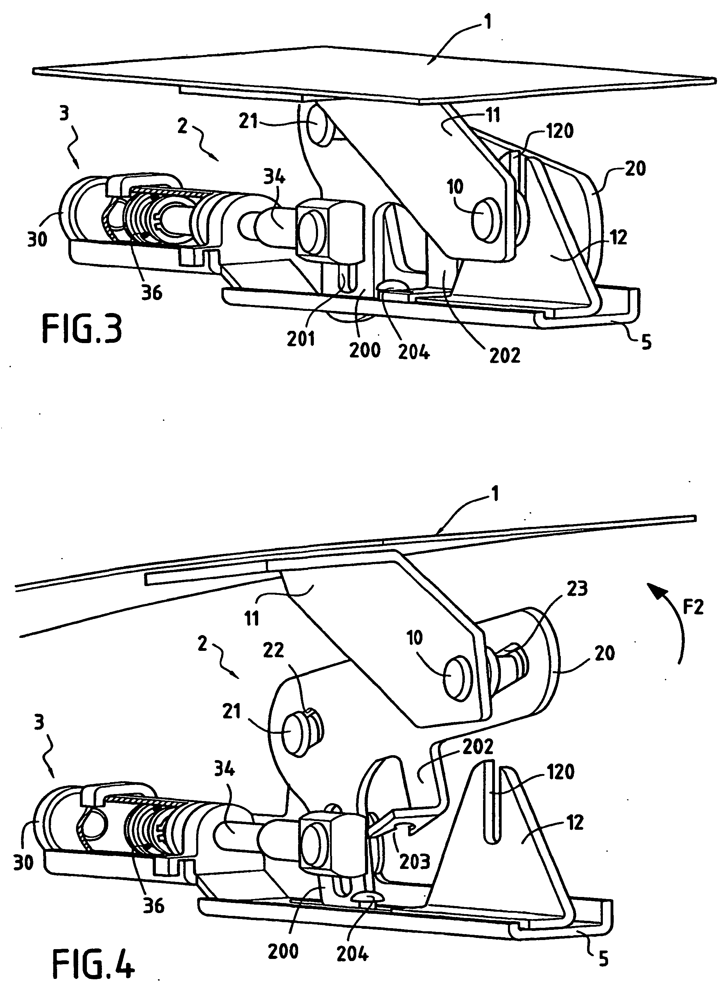

Lorsqu'un impact de piéton est détecté, par exemple contre le pare choc si le détecteur est placé dans le pare-choc, le dispositif de sécurité selon l'invention est activé. Une centrale de commande (non représentée) envoie un ordre au générateur 31 de gaz pour qu'il génère les gaz nécessaires au fonctionnement du dispositif selon l'invention. Les gaz générés par le générateur 31 de gaz pénètrent dans la chambre 32 et poussent le piston 33. La tige 34 solidaire du piston 33 coulisse la long de la bague 35 et se déploie suivant une direction sensiblement horizontale. La tige 34 exerce ainsi une poussée vers l'arrière, en direction du mécanisme 2 de soulèvement. Le déploiement d'une certaine longueur de la tige 34 de l'actionneur 3 provoque d'abord le déverrouillage du mécanisme 2 de soulèvement comme représenté en figure 3. Ce déverrouillage est réalisé grâce à une translation vers l'arrière du mécanisme 2 de soulèvement, et plus précisément de la bielle, suivant une direction parallèle à la direction de poussée de la tige 34. Cette translation dégage la seconde patte 202 du rivet 204 et libère le mouvement de pivotement de la bielle 20. La translation du mécanisme 2 de soulèvement est réalisée suivant les ouvertures 22, 23 oblongues formées aux deux extrémités de la bielle 20, jusqu'à ce que l'axe 21 de pivotement de la bielle 20 et l'axe 10 de rotation du capot 1 vienne chacun en butée à l'extrémité la plus en arrière de l'ouverture 22, 23 oblongue dans laquelle ils sont montés. Une fois la seconde patte 202 dégagée sous l'effet de l'actionneur 3, la tige 34 continue à se déplacer et sous l'effet de la poussée, met en mouvement la bielle 20 qui amorce son pivotement autour de son axe 21 de pivotement comme représenté en figure 4. En avançant, l'extrémité de la tige 34 suit l'ouverture 201 oblongue formée sur la première patte 200 de la bielle 20 ce qui permet de faciliter le pivotement de la bielle 20 autour de son axe de pivotement. Le pivotement de la bielle 20 provoque l'extraction de son support 12 de l'axe 10 de rotation du capot 1. L'axe 10 de rotation du capot 1 se soulève et au fur et à mesure du pivotement de la bielle 20 autour de son axe 21 de pivotement, l'articulation de la bielle 20 avec la patte 11 de soulèvement du capot 1 provoque le soulèvement du capot 1 comme représenté en figure 5. Le soulèvement du capot 1 est effectué jusqu'à une certaine hauteur, par exemple de 80 mm. La longueur d'extraction de la tige 34 est bien sûr prévue pour obtenir le déploiement du mécanisme 2 de soulèvement et en conséquence le soulèvement du capot 1 à la hauteur souhaitée. Le dispositif de sécurité selon l'invention permet donc de soulever le capot 1 suivant un sens de rotation défini par la flèche F2 sur les figures 4 et 5 opposé à celui d'ouverture normale défini par la flèche F1 sur la figure 1.

Le dispositif de sécurité permet de soulever le capot de 80 mm en 30 millisecondes, c'est-à-dire dans les très courts instants après le choc du piéton contre le véhicule.

Selon l'invention, il sera tout à fait possible pour obtenir le déploiement du mécanisme 2 de soulèvement d'utiliser un actionneur 3 permettant de tirer sur le mécanisme 2 de soulèvement.

Lors du choc du piéton contre le capot 1, la tige 34 rentre à l'intérieur de l'actionneur 3. Ce mouvement de retour de la tige 34 est freiné par le système de freinage tel que décrit ci-dessus. Le freinage progressif du mouvement de retour de la tige 34, à l'aide du système de freinage à billes 36, permet d'amortir le choc du piéton sur le capot 1. Pour exercer cette fonction d'amortissement du choc du piéton sur le capot, d'autres systèmes d'amortissement pourront être utilisés. Par exemple, selon une variante, la bielle 20 pourra être composée d'un matériau déformable plastiquement ou élastiquement. De même, l'actionneur 3 pourra être fixé sur un support déformable permettant d'amortir le retour de la tige 34.

Selon l'invention, deux dispositifs de sécurité du type de celui décrit ci-dessus sont installés sous le capot 1 de manière à diminuer la force nécessaire pour soulever le capot 1.

Selon l'invention, la disposition des composants du dispositif de sécurité selon l'invention est dictée notamment par la position de la structure existante d'ouverture et de fermeture du capot 1. Le dispositif de sécurité selon l'invention est tout à fait adaptable aux différentes configurations que peuvent prendre, selon les véhicules, les structures existantes d'ouverture et de fermeture du capot. Le dispositif de sécurité selon l'invention comporte peu de composants qui peuvent être facilement assemblés sur pratiquement tous les systèmes d'ouverture ou de fermeture existants. Selon l'invention, le dispositif de sécurité selon l'invention pourra se présenter sous la forme d'un kit adaptable sur la structure utilisé pour le fonctionnement normal du capot 1.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif de sécurité pour soulever un capot (1) d'un véhicule automobile en cas de collision, ledit capot (1) comprenant une structure permettant, en fonctionnement normal, son ouverture ou sa fermeture, autour d'un axe (10) dit de rotation, le dispositif étant situé sous ledit capot (1) et comprenant un mécanisme (2) de soulèvement dudit capot, un actionneur (3) actionné à l'aide d'un générateur (31) de gaz et un dispositif de verrouillage dudit mécanisme (2) de soulèvement, ledit mécanisme (2) de soulèvement comportant une bielle (20), ledit dispositif étant **caractérisé en ce que** l'actionneur est apte à provoquer une translation du mécanisme de soulèvement pour entraîner son déverrouillage, suivie d'une rotation de la bielle dudit mécanisme pour obtenir le déploiement dudit mécanisme (2) de soulèvement.

2. Dispositif selon la revendication 1, **caractérisé en ce qu'**il est adaptable sur la structure utilisée pour le fonctionnement normal du capot (1).

3. Dispositif selon la revendication 1 ou 2, **caractérisé en ce que** le mécanisme (2) de soulèvement du capot (1) est articulé autour de l'axe (10) de rotation du capot (1).

4. Dispositif selon l'une des revendications 1 à 3, **caractérisé en ce que** le dispositif de verrouillage du mécanisme (2) de soulèvement est constitué de deux formes complémentaires pouvant coopérer entre elles pour verrouiller le mécanisme (2) de soulèvement, l'une de ces formes étant solidaire du mécanisme (2) de soulèvement et l'autre d'une partie (5) fixe par rapport au véhicule.

5. Dispositif selon l'une des revendications 1 à 4, **caractérisé en ce que** la bielle (20) est montée en pivot à l'une de ses extrémités autour d'un axe (21) dit de pivotement fixe par rapport au véhicule et est articulée à son autre extrémité avec le capot (1) autour de l'axe (10) de rotation du capot (1).

6. Dispositif selon la revendication 5, **caractérisé en ce que** la bielle (20) est montée en coulissement à chacune de ses extrémités d'une part par rapport à l'axe (10) de rotation et d'autre part par rapport à l'axe (21) de pivotement.

7. Dispositif selon la revendication 5 ou 6, **caractérisé en ce que** l'actionneur comporte un piston (33) solidaire d'une tige (34), ledit piston (33) étant apte à se déplacer dans une chambre (32) sous l'action des gaz générés par le générateur (31) de gaz.

8. Dispositif selon la revendication 7, **caractérisé en ce que** la tige (34) est apte à s'extraire de l'actionneur (3) suivant une direction horizontale, le mécanisme (2) de soulèvement transformant le mouvement horizontal de la tige (34) en un mouvement vertical de soulèvement du capot (1).

9. Dispositif selon la revendication 8, **caractérisé en ce qu'**il comporte des moyens de freinage au mouvement de retour de la tige (34) dans la chambre (32) de l'actionneur (3).

10. Dispositif selon la revendication 8 ou 9, **caractérisé en ce que** la tige (34) de l'actionneur (3) est solidaire de la bielle (20) en un point déporté par rapport à l'axe (21) de pivotement de ladite bielle (20) et à l'axe longitudinal de la bielle (20) et situé dans un plan horizontal inférieur à celui comportant l'axe (21) de pivotement de la bielle (20).

11. Dispositif selon la revendication 10, **caractérisé en ce que** la tige (34) comprend une extrémité apte à coulisser dans une ouverture (201) oblongue formée sur la bielle (20) pour provoquer la rotation de la bielle (20) autour de son axe (21) de pivotement.

12. Dispositif selon l'une des revendications 1 à 11, **caractérisé en ce que** la bielle (20) est fabriquée dans un matériau déformable.

13. Dispositif selon l'une des revendications 1 à 12, **caractérisé en ce que** l'actionneur (3) est fixé sur un support déformable, fixe par rapport au véhicule.

## Patentansprüche

1. Sicherheitsvorrichtung zum Anheben einer Motorhaube (1) eines Kraftfahrzeugs bei einem Zusammenstoss, wobei die Motorhaube (1) einen Aufbau aufweist, der im Normalbetrieb ihr Öffnen oder Schließen um eine so genannte Drehachse (10) ermöglicht, wobei die Vorrichtung sich unter der Motorhaube (1) befindet und einen Anhebemechanismus (2) für die Motorhaube, ein Stellglied (3), das mit Hilfe eines Gasgenerators (31) betätigt wird, und eine Vorrichtung zum Verriegeln des Anhebemechanismus (2) aufweist, wobei der Anhebemechanismus (2) eine Schubstange (20) aufweist, wobei die Vorrichtung **dadurch gekennzeichnet ist, dass** das Stellglied in der Lage ist, eine Translationsbewegung des Anhebemechanismus hervorzurufen, um seine Entriegelung zu bewirken, gefolgt von einer Drehung der Schubstange des Mechanismus, um das Ausfahren des Anhebemechanismus (2) zu erhalten.

2. Vorrichtung nach Anspruch 1, **dadurch gekennzeichnet, dass** sie an den Aufbau anpassbar ist, der für den normalen Betrieb der Motorhaube (1) verwendet wird.

3. Vorrichtung nach Anspruch 1 oder 2, **dadurch gekennzeichnet, dass** der Anhebemechanismus (2) der Motorhaube (1) um die Drehachse (10) der Motorhaube (1) angelenkt ist.

4. Vorrichtung nach einem der Ansprüche 1 bis 3, **dadurch gekennzeichnet, dass** die Verriegelungsvorrichtung des Anhebemechanismus (2) aus zwei komplementären Formen besteht, die zusammenwirken können, um den Anhebemechanismus (2) zu verriegeln, wobei eine dieser Formen mit dem Anhebemechanismus (2) und die andere mit einem bezüglich des Fahrzeugs ortsfesten Bereichs (5) fest verbunden ist.

5. Vorrichtung nach einem der Ansprüche 1 bis 4, **dadurch gekennzeichnet, dass** die Schubstange (20) an einem ihrer Enden um eine so genannte Schwenkachse (21) schwenkbar montiert ist, die bezüglich des Fahrzeugs ortsfest ist, und an ihrem anderen Ende um die Drehachse (10) der Motorhaube (1) an die Motorhaube (1) angelenkt ist.

6. Vorrichtung nach Anspruch 5, **dadurch gekennzeichnet, dass** die Schubstange (20) an jedem ihrer Enden einerseits bezüglich der Drehachse (10) und andererseits bezüglich der Schwenkachse (21) gleitend montiert ist.

7. Vorrichtung nach Anspruch 5 oder 6, **dadurch gekennzeichnet, dass** das Stellglied einen Kolben (33) aufweist, der fest mit einer Stange (34) verbunden ist, wobei der Kolben (33) in der Lage ist, sich in einer Kammer (32) unter der Einwirkung der vom Gasgenerator (31) erzeugten Gase zu verschieben.

8. Vorrichtung nach Anspruch 7, **dadurch gekennzeichnet, dass** die Stange (34) in der Lage ist, sich in einer waagrechten Richtung aus dem Stellglied (3) zu lösen, wobei der Anhebemechanismus (2) die waagrechte Bewegung der Stange (34) in eine senkrechte Richtung des Anhebens der Motorhaube (1) umwandelt.

9. Vorrichtung nach Anspruch 8, **dadurch gekennzeichnet, dass** sie Bremsmittel für die Rückbewegung der Stange (34) in die Kammer (32) des Stellglieds (3) aufweist.

10. Vorrichtung nach Anspruch 8 oder 9, **dadurch gekennzeichnet, dass** die Stange (34) des Stellglieds (3) an einem bezüglich der Schwenkachse (21) der Schubstange (20) und bezüglich der Längsachse der Schubstange (20) verschobenen Punkt fest mit der Schubstange (20) verbunden ist, der sich in einer waagrechten Ebene befindet, die unter derjenigen liegt, die die Schwenkachse (21) der Schubstange (20) enthält.

11. Vorrichtung nach Anspruch 10, **dadurch gekennzeichnet, dass** die Stange (34) ein Ende aufweist, das in einer länglichen Öffnung (201) gleiten kann, die auf der Schubstange (20) ausgebildet ist, um die Drehung der Schubstange (20) um ihre Schwenkachse (21) zu bewirken.

12. Vorrichtung nach einem der Ansprüche 1 bis 11, **dadurch gekennzeichnet, dass** die Schubstange (20) aus einem verformbaren Material hergestellt wird.

13. Vorrichtung nach einem der Ansprüche 1 bis 12, **dadurch gekennzeichnet, dass** das Stellglied (3) auf einem verformbaren Träger befestigt ist, der bezüglich des Fahrzeugs ortsfest ist.

## Claims

1. Safety device for lifting the bonnet (1) of a motor vehicle in the event of a collision, the said bonnet (1) comprising a structure which permits, under normal operating conditions, the opening and closing thereof about a so-called "hinge pin" (10), the device being situated under the said bonnet (1) and comprising a mechanism (2) for lifting the said bonnet, an activator (3) activated with the aid of a gas-generator (31) and a device for locking the said lifting mechanism (2), the said lifting mechanism (2) having a crank arm (20), the said device being **characterised in that** the activator is capable of giving rise to translation of the lifting mechanism in order to bring about its unlocking, followed by rotation of the crank arm of the said mechanism in order to obtain deployment of the said lifting mechanism (2).

2. Device according to claim 1, **characterised in that** it can be fitted onto the structure used for the normal operation of the bonnet (1).

3. Device according to claim 1 or 2, **characterised in that** the mechanism (2) for lifting the bonnet (1) is articulated about the hinge pin (10) of said bonnet (1).

4. Device according to one of claims 1 to 3, **characterised in that** the device for locking the lifting mechanism (2) is made up of two complementary shaped pieces which are capable of cooperating with one another in order to lock said lifting mechanism (2), one of the said shaped pieces being integral with the lifting mechanism (2), and the other with a part (5) which is fixed in relation to the vehicle.

5. Device according to one of claims 1 to 4, **characterised in that** the crank arm (20) is mounted so as to pivot, at one of its ends, about a so-called "pivot pin" (21) which is fixed in relation to the vehicle, and said crank arm is articulated at its other end, with the bonnet (1), about the hinge pin (10) of said bonnet (1).

6. Device according to claim 5, **characterised in that** the crank arm (20) is mounted so as to slide at each of its ends, on the one hand, in relation to the hinge pin (10) and, on the other hand, in relation to the pivot pin (21).

7. Device according to claim 5 or 6, **characterised in that** the activator has a piston (33) which is integral with a rod (34), the said piston (33) being capable of being displaced within a chamber (32) under the action of the gases generated by the gas-generator (31).

8. Device according to claim 7, **characterised in that** the rod (34) is capable of being drawn out of the activator (3) in a horizontal direction, the lifting mechanism (3) transforming the horizontal movement of said rod (34) into a vertical movement for lifting the bonnet (1).

9. Device according to claim 8, **characterised in that** it has means for braking the return movement of the rod (34) within the chamber (32) of the activator (3).

10. Device according to claim 8 or 9, **characterised in that** the rod (34) of the activator (3) is integral with the crank arm (20) at a point which is offset in relation to the pin (21) for pivoting the said crank arm (20) and to the longitudinal axis of said crank arm (20), and is situated in a horizontal plane which is lower than that having the pin (21) for pivoting said crank arm (20).

11. Device according to claim 10, **characterised in that** the rod (34) comprises an end which is capable of sliding within an oblong opening (201) formed on the crank arm (20) in order to give rise to rotation of said crank arm (20) about its pivot pin (21).

12. Device according to one of claims 1 to 11, **characterised in that** the crank arm (20) is manufactured from a deformable material.

13. Device according to one of claims 1 to 12, **characterised in that** the activator (3) is fixed onto a deformable support which is fixed in relation to the vehicle.
